# EUROPÄISCHE PATENTSCHRIFT

(11) **EP 3 277 010 B1**
(45) Veröffentlichungstag und Bekanntmachung des Hinweises auf die Patenterteilung: **08.12.2021**
(21) Anmeldenummer: 17180651.6
(22) Anmeldetag: 11.07.2017
(51) Int. Cl.: H04W 12/06, H04L 29/06, H04L 29/08, H04W 4/48, H04W 12/50

(54) **VERFAHREN ZUM BEREITSTELLEN EINER AUTHENTIFIZIERTEN VERBINDUNG ZWISCHEN MINDESTENS ZWEI KOMMUNIKATIONSPARTNERN**
METHOD FOR PROVIDING AN AUTHENTICATED CONNECTION BETWEEN AT LEAST TWO COMMUNICATION PARTNERS
PROCÉDÉ PERMETTANT D'OBTENIR UNE LIAISON AUTHENTIFIÉE ENTRE AU MOINS DEUX PARTENAIRES DE COMMUNICATION

(30) Priorität: 26.07.2016 DE 102016213701
(43) Veröffentlichungstag der Anmeldung: 31.01.2018
(73) Patentinhaber: VOLKSWAGEN AKTIENGESELLSCHAFT, 38440 Wolfsburg (DE)
(72) Erfinder: Winkelvos, Timo, 38173 Sickte (DE); Tschache, Alexander, 38436 Wolfsburg (DE); Wuschke, Martin, 38527 Meine (DE)

(56) Entgegenhaltungen:
- US-A1- 2011 210 820
- US-A1- 2014 187 149
- US-A1- 2014 196 111
- US-A1- 2015 339 334

## Beschreibung

Die Erfindung betrifft ein Verfahren zum Bereitstellen einer authentifizierten Verbindung zwischen mindestens zwei Kommunikationspartnern und ein Kommunikationssystem.

Moderne Fahrzeuge verfügen über Infotainment-Systeme, welche sich mit Smartphones koppeln lassen. Durch die Kopplung kann ein Infotainment-System beispielsweise auf Medieninhalte zugreifen, welche auf dem gekoppelten Smartphone gespeichert sind, um diese im Fahrzeug wiederzugeben.

Außerdem kann eine signalleitende Verbindung zwischen dem fahrzeuginternen Infotainment-System und dem Smartphone dazu verwendet werden, eine Benutzeridentifikation durchzuführen oder dem Infotainment-System anwendungsbezogene Benutzerdaten bereitzustellen.

Da zwischen dem Infotainment-System und dem Smartphone üblicherweise auch personenbezogene Daten und anwendungsbezogene Zugangsdaten übermittelt werden, ist diese signalleitende Verbindung mit einem geeigneten Schutz auszustatten. Bekannte Lösungen basieren auf dem Schutz der gesamten Kommunikationsverbindung zwischen den Kommunikationspartnern, sodass sämtliche Anwendungen von der Sicherheit dieser Kommunikationsverbindung abhängig sind.

Die Druckschrift DE 10 2005 023 544 A1 schlägt ein Kommunikationssystem mit einer Fahrzeug-Bedieneinheit, einer Fahrzeug-Ausgabeeinheit, einem Schnittstellenrechner und einem mobilen Endgerät vor, wobei der Schnittstellenrechner einen Zugangsschutz aufweist, damit das mobile Endgerät nur auf autorisierte Fahrzeugfunktionen zugreifen kann.

Zur Steigerung des Kopplungskomforts offenbart die Druckschrift DE 10 2014 225 808 A1 ein Bluetooth-Verbindungsverfahren, bei welchem ein mobiles Endgerät und ein Infotainment-System eines Fahrzeugs verbunden werden. Zum Herstellen einer Bluetooth-Kopplung wird durch eine in dem Infotainment-System angeordnete Steuerung eine Anwendung auf dem mobilen Endgerät ausgeführt. Die zur Kopplung notwenigen Informationen werden durch die Steuerung an die Anwendung übertragen und in einem NFC- (Near Field Communication) Tag durch die Anwendung gespeichert.

Aus der Druckschrift DE 10 2013 201 624 A1 ist außerdem ein Verfahren zum Übertragen von Daten von einem mobilen Endgerät zu einer Funktion eines Fahrzeugs bekannt, bei welchem ein Bedienelement auf einer berührungsempfindlichen Anzeige des mobilen Endgeräts angezeigt wird. Das Bedienelement umfasst einen Hinweis, der in die Richtung deutet, in der sich eine Wiedergabeeinrichtung des Fahrzeugs befindet. Durch ein Wischen des Benutzers in die angezeigte Richtung, wird die Datenübertragung zwischen dem mobilen Endgerät und der Wiedergabeeinrichtung aktiviert.

US 2014/187149 A1 lehrt Systeme und Verfahren, die auf URI-basierten Host-zu-Mobilgeräte-Setup und -Paarung gerichtet sind. Ein Uniform Resource Identifier (URI) kann von einem Hostgerät empfangen werden. Eine Anfrage nach einer Anwendung, die mit dem Host-Gerät und dem drahtlosen Gerät assoziiert ist, kann zumindest teilweise basierend auf dem URI übertragen werden. Die angeforderte Anwendung kann empfangen werden. Eine Verbindung mit dem Host-Gerät kann zumindest teilweise basierend auf der Anwendung hergestellt werden.

US 2014/196111 A1 lehrt Verfahren, Systeme und Vorrichtungen zum kommunikativen Koppeln und Sichern eines elektronischen Geräts mit einem fahrzeugbasierten elektronischen System. Die Paarung kann ermöglichen, dass das elektronische Gerät nahtlos mit dem elektronischen Gerät kommuniziert, und kann Infotainment für Benutzer des Fahrzeugs bereitstellen.

US 2015/339334 A1 lehrt ein Verfahren zum Eingeben von Identifikationsdaten eines Fahrzeugs in eine Benutzerdatenbank eines Internetservers umfassend die Schritte: Herstellen einer Netzwerkverbindung über das Internet zu dem Server und Authentifizieren eines Benutzers an einem Internetportal des Servers und Übertragen der Identifikationsdaten über die Netzwerkverbindung mit dem Server und Speichern der Identifikationsdaten als Teil von Benutzerdaten des Benutzers in der Benutzerdatenbank durch den Server.

US 2011/210820 A1 lehrt ein System und ein Verfahren zum einfachen und sicheren Paaren mehrerer Bluetooth- oder anderer drahtloser elektronischer Geräte in einem Netzwerk. Mehrere Nur-Lese-Tags mit Nahfeldkommunikation (NFC) sind Orte in einem Fahrzeug oder einem anderen definierten Raum, so dass Benutzer von NFC-fähigen elektronischen Geräten ihr Gerät in der Nähe eines der NFC-Tags bewegen können, die dann Verschlüsselungsschlüsseldaten an das Benutzergerät übertragen.

Die bekannten Lösungen haben den Nachteil, dass die Sicherheit der Verbindung zwischen einem Infotainment-System und einem mobilen Endgerät auf der Sicherheit der Kommunikationsverbindung basiert. Bei einem Verbindungsaufbau wird lediglich das mobile Endgerät identifiziert und nach erfolgter Authentifizierung die Kommunikationsverbindung zwischen dem Infotainment-System und dem mobilen Endgerät für sämtliche Anwendungen freigegeben.

Der Erfindung liegt nun die Aufgabe zugrunde, eine Kopplung von mindestens zwei Kommunikationspartnern zu ermöglichen, welche auf Anwendungsebene erfolgt und somit unabhängig von dem Schutz der Kommunikationsverbindung zwischen den Kommunikationspartnern ist.

Die Erfindung ist durch die unabhängigen Ansprüche 1 und 8 definiert. Die abhängigen Ansprüche definieren bevorzugte Ausführungsformen.

Bei dem erfindungsgemäßen Verfahren zum Bereitstellen einer authentifizierten Verbindung zwischen mindestens zwei Kommunikationspartnern wird eine Serveranwendung auf einem ersten Kommunikationspartner der mindestens zwei Kommunikationspartner ausgeführt und eine erste Benutzeranwendung auf einem zweiten Kommunikationspartner der mindestens zwei Kommunikationspartner ausgeführt. Außerdem wird ein anwendungsbezogenes Pairing zwischen der Serveranwendung auf dem ersten Kommunikationspartner und der ersten Benutzeranwendung auf dem zweiten Kommunikationspartner zur Herstellung einer anwendungsbeschränkten authentifizierten Verbindung zwischen dem ersten Kommunikationspartner und der ersten Benutzeranwendung auf dem zweiten Kommunikationspartner durchgeführt.

Das erfindungsgemäße Verfahren hat den Vorteil, dass eine anwendungsbeschränkte authentifizierte Verbindung zwischen dem ersten Kommunikationspartner und der ersten Benutzeranwendung auf dem zweiten Kommunikationspartner hergestellt wird, um die Ende-zu-Ende Kommunikation zwischen den Kommunikationspartnern zu schützen. Die Sicherheit beziehungsweise der Schutz des Kommunikationsweges, also des Kommunikationskanals zwischen den Kommunikationspartnern, ist somit unbeachtlich. Durch die anwendungsbeschränkte Authentifizierung der Verbindung kann außerdem eine anwendungsspezifische Rechtekonfiguration erfolgen, sodass für verschiedene Benutzeranwendungen unterschiedliche Rechte vergeben werden können.

Es kann eine zweite Benutzeranwendung auf dem zweiten Kommunikationspartner ausgeführt werden, sodass ein weiteres anwendungsbezogenenes Pairing zwischen der Serveranwendung auf dem ersten Kommunikationspartner und der zweiten Benutzeranwendung auf dem zweiten Kommunikationspartner zur Herstellung einer anwendungsbeschränkten authentifizierten Verbindung zwischen dem ersten Kommunikationspartner und der zweiten Benutzeranwendung auf dem zweiten Kommunikationspartner durchgeführt werden kann. Insbesondere können beliebig viele Benutzeranwendungen auf dem zweiten Kommunikationspartner ausgeführt werden, sodass jeweils ein anwendungsbezogenes Pairing zwischen der Serveranwendung auf dem ersten Kommunikationspartner und der jeweiligen Benutzeranwendung auf dem zweiten Kommunikationspartner zur Herstellung einer anwendungsbeschränkten authentifizierten Verbindung zwischen dem ersten Kommunikationspartner und der jeweiligen Benutzeranwendung auf dem zweiten Kommunikationspartner durchgeführt werden kann. Somit können mehrere oder sämtliche anwendungsbezogene Kommunikationsverbindungen von der Sicherheit beziehungsweise dem Schutz des verwendeten Kommunikationskanals entkoppelt und anwendungsspezifisch konfiguriert werden.

Außerdem können erste anwendungsbezogene Zugangsdaten zwischen der ersten Benutzeranwendung auf dem zweiten Kommunikationspartner und der Serveranwendung auf dem ersten Kommunikationspartner über die anwendungsbeschränkte authentifizierte Verbindung zwischen dem ersten Kommunikationspartner und der ersten Benutzeranwendung auf dem zweiten Kommunikationspartner ausgetauscht werden. Alternativ oder zusätzlich können zweite anwendungsbezogene Zugangsdaten zwischen der zweiten Benutzeranwendung auf dem zweiten Kommunikationspartner und der Serveranwendung auf dem ersten Kommunikationspartner über die anwendungsbeschränkte authentifizierte Verbindung zwischen dem ersten Kommunikationspartner und der zweiten Benutzeranwendung auf dem zweiten Kommunikationspartner ausgetauscht werden. Darüber hinaus können anwendungsbezogene Zugangsdaten für mehrere oder sämtliche Benutzeranwendungen zwischen der jeweiligen Benutzeranwendung auf dem zweiten Kommunikationspartner und der Serveranwendung auf dem ersten Kommunikationspartner über die anwendungsbeschränkte authentifizierte Verbindung zwischen dem ersten Kommunikationspartner und der jeweiligen Benutzeranwendung auf dem zweiten Kommunikationspartner ausgetauscht werden. Durch den Austausch von Zugangsdaten wird die manuelle Eingabe von Zugangsdaten teilweise oder vollständig überwunden und somit der Kopplungskomfort weiter erhöht.

Das Austauschen von anwendungsbezogenen Zugangsdaten zwischen einer Benutzeranwendung auf dem zweiten Kommunikationspartner und der Serveranwendung auf dem ersten Kommunikationspartner kann nur beim erstmaligen Verbindungsaufbau zwischen der jeweiligen Benutzeranwendung auf dem zweiten Kommunikationspartner und dem ersten Kommunikationspartner erfolgen. Nach dem erstmaligen Verbindungsaufbau werden vorzugsweise sämtliche Zugangsdaten zwischen der Serveranwendung auf dem ersten Kommunikationspartner und der Benutzeranwendung auf dem zweiten Kommunikationspartner ausgetauscht, welche zur vollständigen Nutzung der Benutzeranwendung berechtigen. Somit kann bei einem erneuten Verbindungsaufbau auf den Austausch der Zugangsdaten zwischen der Serveranwendung und der Benutzeranwendung verzichtet werden. Die führt zu einer Beschleunigung der Gerätekopplung und zu einer Steigerung des Kopplungskomforts.

Die zwischen einer Benutzeranwendung auf dem zweiten Kommunikationspartner und der Serveranwendung auf dem ersten Kommunikationspartner ausgetauschten anwendungsbezogenen Zugangsdaten können auf einem Speicher des ersten Kommunikationspartners gespeichert werden. Durch die Speicherung der Zugangsdaten liegen dem ersten Kommunikationspartner die zu einer spezifischen Benutzeranwendung gehörigen Daten dauerhaft vor und können bei Bedarf, nämlich bei einem erneuten Verbindungsaufbau, abgerufen und verwendet werden.

Der zweite Kommunikationspartner kann durch die Serveranwendung auf dem ersten Kommunikationspartner identifiziert werden. Alternativ oder zusätzlich kann die auf dem zweiten Kommunikationspartner ausgeführte Benutzeranwendung durch die Serveranwendung auf dem ersten Kommunikationspartner identifiziert werden. Die Serveranwendung auf dem ersten Kommunikationspartner kann prüfen, ob bereits ein anwendungsbezogenes Pairing zwischen der Serveranwendung auf dem ersten Kommunikationspartner und der Benutzeranwendung auf dem zweiten Kommunikationspartner zur Herstellung einer anwendungsbeschränkten authentifizierten Verbindung zwischen dem ersten Kommunikationspartner und der Benutzeranwendung auf dem zweiten Kommunikationspartner stattgefunden hat. Falls ein anwendungsbezogenes Pairing zwischen der Serveranwendung auf dem ersten Kommunikationspartner und der Benutzeranwendung auf dem zweiten Kommunikationspartner zur Herstellung einer anwendungsbeschränkten authentifizierten Verbindung zwischen dem ersten Kommunikationspartner und der Benutzeranwendung auf dem zweiten Kommunikationspartner bereits stattgefunden hat, können die gespeicherten anwendungsbezogenen Zugangsdaten von dem Speicher des ersten Kommunikationspartners abgerufen werden. Die bezeichneten Schritte können automatisch und ohne die Notwendigkeit einer Benutzerhandlung ausgeführt werden. Auf diese Weise wird der Kopplungsvorgang nach dem erstmaligen Verbindungsaufbau zwischen einer Benutzeranwendung auf dem Kommunikationspartner und dem ersten Kommunikationspartner beschleunigt. Da keine Benutzerhandlungen notwendig sind, wird außerdem der Kopplungskomfort erhöht.

Die jeweiligen Zugangsdaten können einen anwendungsbezogen Benutzernamen, ein anwendungsbezogenes Passwort und/oder ein Zertifikat umfassen. Der anwendungsbezogene Benutzername und/oder das anwendungsbezogene Passwort können eine Buchstaben- und/oder Zahlenfolge umfassen. Das Zertifikat kann ein von dem Benutzer, einem Fahrzeughersteller oder einer Zertifizierungsstelle erzeugtes und/oder ausgegebenes Zertifikat sein. Durch den Zertifikatsaustausch kann eine weitere Authentifizierungsstufe in das Verfahren integriert werden. Beispielsweise liegt beiden Kommunikationspartnern das ausgetauschte Zertifikat vor, sodass eine zusätzliche Authentifizierung durch einen Zertifikatsabgleich erfolgen kann.

Bei dem Durchführen des anwendungsbezogenen Pairings zwischen der Serveranwendung auf dem ersten Kommunikationspartner und der ersten Benutzeranwendung auf dem zweiten Kommunikationspartner zur Herstellung einer anwendungsbeschränkten authentifizierten Verbindung zwischen dem ersten Kommunikationspartner und der ersten Benutzeranwendung auf dem zweiten Kommunikationspartner können auf dem ersten Kommunikationspartner anwendungsbezogene Pairing-Informationen angezeigt werden und/oder auf dem zweiten Kommunikationspartner anwendungsbezogene Pairing-Informationen angezeigt werden. Alternativ oder zusätzlich kann das Durchführen eines anwendungsbezogenen Pairings zwischen der Serveranwendung auf dem ersten Kommunikationspartner und der ersten Benutzeranwendung auf dem zweiten Kommunikationspartner zur Herstellung einer anwendungsbeschränkten authentifizierten Verbindung zwischen dem ersten Kommunikationspartner und der ersten Benutzeranwendung auf dem zweiten Kommunikationspartner das Bestätigen der anwendungsbezogenen Pairing-Informationen auf dem ersten Kommunikationspartner durch einen Benutzer und/oder das Bestätigen der anwendungsbezogenen Pairing-Informationen auf dem zweiten Kommunikationspartner durch einen Benutzer umfassen. Dadurch, dass Pairing-Informationen angezeigt und von einem Benutzer bestätigt werden müssen, ist eine Benutzerhandlung notwendig. Durch die Benutzerhandlung kann die Authentifizierung der Verbindung zwischen den mindestens zwei Kommunikationspartnern beeinflusst werden. Dies führt zu einer gesteigerten Sicherheit und zu dem Erzeugen eines Vertrauens des Benutzers in die Sicherheit der Verbindung zwischen den mindestens zwei Kommunikationspartnern.

In dem Verfahren kann der erste Kommunikationspartner als fahrzeuginterne Einrichtung ausgebildet sein. Insbesondere ist die fahrzeuginterne Einrichtung als Infotainment-System des Fahrzeugs ausgeführt. Alternativ oder zusätzlich kann in dem Verfahren der zweite Kommunikationspartner als mobiles Endgerät ausgebildet sein. Insbesondere ist das mobile Endgerät als Smartphone ausgeführt. Die Benutzeranwendungen können Anwendungen zur Wiedergabe von Medieninhalten, wie Audioinhalten oder Videoinhalten, umfassen. Alternativ oder zusätzlich können die Benutzeranwendungen Navigationsdienste oder Anwendungen unterschiedlicher sozialer Netzwerke sein. Die Benutzeranwendungen können auch andere mobile Online-Dienste betreffen.

Das erfindungsgemäße Kommunikationssystem umfasst mindestens zwei Kommunikationspartner, wobei auf einem ersten Kommunikationspartner der mindestens zwei Kommunikationspartner eine Serveranwendung und auf einem zweiten Kommunikationspartner der mindestens zwei Kommunikationspartner eine erste Benutzeranwendung installiert ist. Das Kommunikationssystem ist dazu eingerichtet, dass ein anwendungsbezogenes Pairing zwischen der Serveranwendung auf dem ersten Kommunikationspartner und der ersten Benutzeranwendung auf dem zweiten Kommunikationspartner zur Herstellung einer anwendungsbeschränkten authentifizierten Verbindung zwischen dem ersten Kommunikationspartner und der ersten Benutzeranwendung auf dem zweiten Kommunikationspartner durchgeführt wird, wenn die Serveranwendung auf dem ersten Kommunikationspartner und die erste Benutzeranwendung auf dem zweiten Kommunikationspartner ausgeführt werden.

Das erfindungsgemäße Kommunikationssystem hat den Vorteil, dass es die Herstellung einer anwendungsbeschränkten authentifizierten Verbindung zwischen dem ersten Kommunikationspartner und der ersten Benutzeranwendung auf dem zweiten Kommunikationspartner erlaubt, um die Ende-zu-Ende Kommunikation zwischen den Kommunikationspartnern zu schützen. Die Sicherheit beziehungsweise der Schutz des Kommunikationsweges, also des Kommunikationskanals zwischen den Kommunikationspartnern, ist somit unbeachtlich. Dadurch, dass das Kommunikationssystem eine anwendungsbeschränkte Authentifizierung der Verbindung erlaubt, kann außerdem eine anwendungsspezifische Rechtekonfiguration erfolgen, sodass für verschiedene Benutzeranwendungen unterschiedliche Rechte vergeben werden können.

Auf dem zweiten Kommunikationspartner des Kommunikationssystems kann eine zweite Benutzeranwendung installiert sein, wobei das Kommunikationssystem dazu eingerichtet ist, dass ein anwendungsbezogenes Pairing zwischen der Serveranwendung auf dem ersten Kommunikationspartner und der zweiten Benutzeranwendung auf dem zweiten Kommunikationspartner zur Herstellung einer anwendungsbeschränkten authentifizierten Verbindung zwischen dem ersten Kommunikationspartner und der zweiten Benutzeranwendung auf dem zweiten Kommunikationspartner durchgeführt werden kann, wenn die Serveranwendung auf dem ersten Kommunikationspartner und die zweite Benutzeranwendung auf dem zweiten Kommunikationspartner ausgeführt werden. Insbesondere können beliebig viele Benutzeranwendungen auf dem zweiten Kommunikationspartner des Kommunikationssystems Installiert sein, wobei das Kommunikationssystem dazu eingerichtet ist, dass jeweils ein anwendungsbezogenes Pairing zwischen der Serveranwendung auf dem ersten Kommunikationspartner und der jeweiligen Benutzeranwendung auf dem zweiten Kommunikationspartner zur Herstellung einer anwendungsbeschränkten authentifizierten Verbindung zwischen dem ersten Kommunikationspartner und der jeweiligen Benutzeranwendung auf dem zweiten Kommunikationspartner durchgeführt werden kann, wenn die Serveranwendung auf dem ersten Kommunikationspartner und die jeweilige Benutzeranwendung auf dem zweiten Kommunikationspartner ausgeführt werden. Somit können mehrere oder sämtliche anwendungsbezogene Kommunikationsverbindungen des Kommunikationssystems von der Sicherheit beziehungsweise dem Schutz des verwendeten Kommunikationskanals entkoppelt und anwendungsspezifisch konfiguriert werden.

Das Kommunikationssystem kann dazu eingerichtet sein, anwendungsbezogene Zugangsdaten zwischen einer Benutzeranwendung auf dem zweiten Kommunikationspartner und der Serveranwendung auf dem ersten Kommunikationspartner über die anwendungsbeschränkte authentifizierte Verbindung zwischen dem ersten Kommunikationspartner und der jeweiligen Benutzeranwendung auf dem zweiten Kommunikationspartner auszutauschen, wobei das Austauschen von anwendungsbezogenen Zugangsdaten zwischen einer Benutzeranwendung auf dem zweiten Kommunikationspartner und der Serveranwendung auf dem ersten Kommunikationspartner vorzugsweise nur beim erstmaligen Verbindungsaufbau zwischen der jeweiligen Benutzeranwendung auf dem zweiten Kommunikationspartner und dem ersten Kommunikationspartner erfolgt. Durch den Austausch von Zugangsdaten wird die manuelle Eingabe von Zugangsdaten teilweise oder vollständig überwunden und somit der Kopplungskomfort weiter erhöht. Das Kommunikationssystem kann dazu eingerichtet sein, nach dem erstmaligen Verbindungsaufbau sämtliche Zugangsdaten zwischen der Serveranwendung auf dem ersten Kommunikationspartner und der Benutzeranwendung auf dem zweiten Kommunikationspartner auszutauschen, welche zur vollständigen Nutzung der Benutzeranwendung berechtigen. Somit kann bei einem erneuten Verbindungsaufbau auf den Austausch der Zugangsdaten zwischen der Serveranwendung und der Benutzeranwendung verzichtet werden. Die führt zu einer Beschleunigung der Gerätekopplung und zu einer Steigerung der Kopplungskomforts.

Der erste Kommunikationspartner kann einen Speicher umfassen, wobei der erste Kommunikationspartner dazu eingerichtet sein kann, die zwischen einer Benutzeranwendung auf dem zweiten Kommunikationspartner und der Serveranwendung auf dem ersten Kommunikationspartner ausgetauschten anwendungsbezogenen Zugangsdaten auf dem Speicher zu speichern. Durch die Speicherung der Zugangsdaten liegen dem ersten Kommunikationspartner die zu einer spezifischen Benutzeranwendung gehörigen Daten dauerhaft vor und können bei Bedarf, nämlich bei einem erneuten Verbindungsaufbau, abgerufen und verwendet werden. Das erste Kommunikationspartner kann dazu eingerichtet sein, den zweiten Kommunikationspartner und/oder die auf dem zweiten Kommunikationspartner ausgeführte Benutzeranwendung durch die Serveranwendung zu identifizieren und zu prüfen, ob bereits ein anwendungsbezogenes Pairing zwischen der Serveranwendung auf dem ersten Kommunikationspartner und einer Benutzeranwendung auf dem zweiten Kommunikationspartner zur Herstellung einer anwendungsbeschränkten authentifizierten Verbindung zwischen dem ersten Kommunikationspartner und der Benutzeranwendung auf dem zweiten Kommunikationspartner stattgefunden hat. Der erste Kommunikationspartner kann dazu eingerichtet sein, gespeicherte anwendungsbezogene Zugangsdaten von dem Speicher des ersten Kommunikationspartners abzurufen, falls ein anwendungsbezogenes Pairing zwischen der Serveranwendung auf dem ersten Kommunikationspartner und einer Benutzeranwendung auf dem zweiten Kommunikationspartner zur Herstellung einer anwendungsbeschränkten authentifizierten Verbindung zwischen dem ersten Kommunikationspartner und der Benutzeranwendung auf dem zweiten Kommunikationspartner stattgefunden hat. Das Kommunikationssystem kann dazu eingerichtet sein, das bezeichnete Identifizieren, Prüfen und Abrufen automatisch und ohne die Notwendigkeit einer Benutzerhandlung auszuführen. Auf diese Weise erlaubt es das Kommunikationssystem, dass der Kopplungsvorgang nach dem erstmaligen Verbindungsaufbau zwischen einer Benutzeranwendung auf dem zweiten Kommunikationspartner und dem ersten Kommunikationspartner beschleunigt werden kann. Da keine Benutzerhandlungen notwendig sind, wird außerdem der Kopplungskomfort erhöht.

Die jeweiligen Zugangsdaten können einen anwendungsbezogen Benutzernamen, ein anwendungsbezogenes Passwort und/oder ein Zertifikat umfassen. Der erste Kommunikationspartner und der zweite Kommunikationspartner können dazu eingerichtet sein, anwendungsbezogene Benutzernamen und/oder anwendungsbezogene Passwörter, welche eine Buchstaben- und/oder Zahlenfolge umfassen, zu verwalten. Das Zertifikat kann ein von dem Benutzer, einem Fahrzeughersteller oder einer Zertifizierungsstelle erzeugtes und/oder ausgegebenes Zertifikat sein. Durch den Zertifikatsaustausch kann eine weitere Authentifizierungsstufe in das Kommunikationssystem integriert werden. Beispielsweise liegt beiden Kommunikationspartnern das ausgetauschte Zertifikat vor, sodass die zusätzliche Authentifizierung durch einen Zertifikatsabgleich erfolgen kann.

Der erste Kommunikationspartner und/oder der zweite Kommunikationspartner können dazu eingerichtet sein, einem Benutzer anwendungsbezogene Pairing-Informationen anzuzeigen. Hierzu können der erste Kommunikationspartner und/oder der zweite Kommunikationspartner jeweils eine Anzeigeeinrichtung aufweisen. Die Anzeigeeinrichtung kann als Display oder als Touchscreen ausgebildet sein. Der erste Kommunikationspartner und/oder der zweite Kommunikationspartner können jeweils eine Betätigungseinrichtung aufweisen, welches es einem Benutzer erlaubt, anwendungsbezogene Pairing-Informationen auf dem ersten Kommunikationspartner und/oder dem zweiten Kommunikationspartner zu bestätigen. Die Betätigungseinrichtung kann ein oder mehrere Betätigungselemente, wie beispielsweise Tasten oder Druckknöpfe, oder einen Touchscreen umfassen. Dadurch, dass bei dem Kommunikationssystem Pairing-Informationen angezeigt und von einem Benutzer bestätigt werden müssen, ist eine Benutzerhandlung notwendig. Durch die Benutzerhandlung kann die Authentifizierung der Verbindung zwischen den mindestens zwei Kommunikationspartnern beeinflusst werden. Dies führt zu einer gesteigerten Sicherheit.

Der erste Kommunikationspartner kann als fahrzeuginterne Einrichtung ausgebildet sein. Insbesondere ist die fahrzeuginterne Einrichtung als Infotainment-System des Fahrzeugs ausgeführt. Alternativ oder zusätzlich kann der zweite Kommunikationspartner als mobiles Endgerät ausgebildet sein. Insbesondere ist das mobile Endgerät als Smartphone ausgeführt. Die Benutzeranwendungen können Anwendungen zur Wiedergabe von Medieninhalten, wie Audioinhalten oder Videoinhalten, umfassen. Alternativ oder zusätzlich können die Benutzeranwendungen Navigationsdienste oder Anwendungen unterschiedlicher sozialer Netzwerke sein. Die Benutzeranwendungen können auch andere mobile Online-Dienste betreffen.

Das Kommunikationssystem kann dazu eingerichtet sein, das Verfahren zum Bereitstellen einer authentifizierten Verbindung zwischen mindestens zwei Kommunikationspartnern nach einer der vorstehend beschriebenen Ausführungsformen auszuführen. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

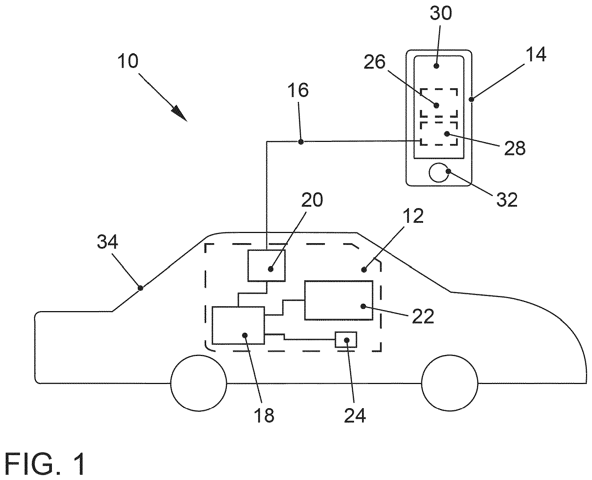

Die Erfindung wird nachfolgend in Ausführungsbeispielen anhand der zugehörigen Zeichnungen erläutert. Es zeigen:
- .Figur 1: ein Ausführungsbeispiel des erfindungsgemäßen Kommunikationssystems in einer schematischen Darstellung; und

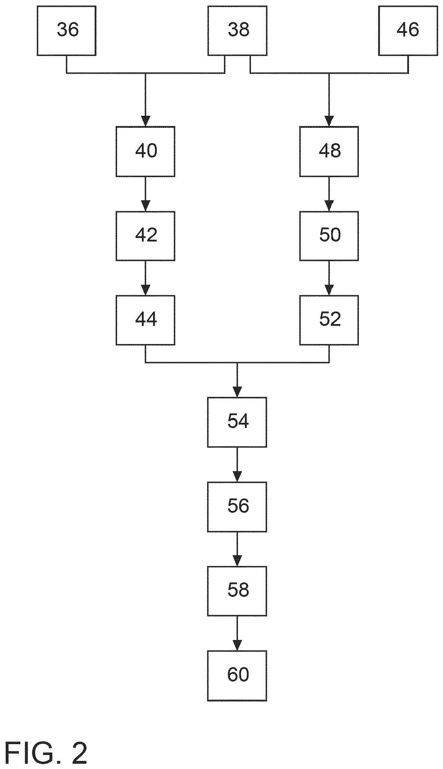

- Figur 2: ein Ausführungsbeispiel des erfindungsgemäßen Verfahrens in einem schematischen Ablaufdiagramm.

Figur 1 zeigt ein Kommunikationssystem 10 mit zwei Kommunikationspartnern 12, 14. Der erste Kommunikationspartner 12 ist als fahrzeuginterne Einrichtung des Fahrzeugs 34 ausgebildet, wobei die fahrzeuginterne Einrichtung ein Infotainment-System ist. Der zweite Kommunikationspartner 14 ist als mobiles Endgerät ausgebildet, wobei das mobile Endgerät als Smartphone ausgeführt ist.

Der erste Kommunikationspartner 12 umfasst eine Recheneinheit 18, ein Kommunikationsmodul 20, eine Anzeigeeinrichtung 22 und eine Betätigungseinrichtung 24. Das Kommunikationsmodul 20, die Anzeigeeinrichtung 22 und die Betätigungseinrichtung 24 sind signalleitend mit der Recheneinheit 18 verbunden. Das Kommunikationsmodul 20 ist dazu eingerichtet, drahtlos, beispielsweise per Bluetooth, mit anderen Kommunikationspartnern zu kommunizieren. Die Anzeigeeinrichtung 22 ist als Display ausgebildet und in das Armaturenbrett des Fahrzeugs 34 integriert. Die Betätigungseinrichtung 24 umfasst mehrere drucksensitive Eingabeelemente und in der Mittelkonsole des Fahrzeugs 34 integriert.

Der zweite Kommunikationspartner 14 umfasst ebenfalls eine Recheneinheit 26, ein Kommunikationsmodul 28, eine Anzeigeeinrichtung 30 und eine Betätigungseinrichtung 32. Das Kommunikationsmodul 28, die Anzeigeeinrichtung 30 und die Betätigungseinrichtung 24 sind signalleitend mit der Recheneinheit 26 verbunden. Das Kommunikationsmodul 28 ist dazu eingerichtet, drahtlos, beispielsweise per Bluetooth, mit anderen Kommunikationspartnern zu kommunizieren. Die Anzeigeeinrichtung 30 ist als Touchscreen ausgebildet. Die Betätigungseinrichtung 32 ist als Druckknopf ausgebildet.

Auf dem ersten Kommunikationspartner 12 ist eine Serveranwendung und auf dem zweiten Kommunikationspartner 14 sind mehrere Benutzeranwendungen installiert. Das Kommunikationssystem 10 ist dazu eingerichtet, dass ein anwendungsbezogenes Pairing zwischen der Serveranwendung auf dem ersten Kommunikationspartner 12 und den jeweiligen Benutzeranwendungen auf dem zweiten Kommunikationspartner 14 zur Herstellung einer anwendungsbeschränkten authentifizierten Verbindung 16 zwischen dem ersten Kommunikationspartner 12 und den jeweiligen Benutzeranwendungen auf dem zweiten Kommunikationspartner 14 durchgeführt wird, wenn die Serveranwendung auf dem ersten Kommunikationspartner 12 und die jeweiligen Benutzeranwendungen auf dem zweiten Kommunikationspartner 14 ausgeführt werden.

Das Kommunikationssystem 10 ist ferner dazu eingerichtet, anwendungsbezogene Zugangsdaten zwischen einer Benutzeranwendung auf dem zweiten Kommunikationspartner 14 und der Serveranwendung auf dem ersten Kommunikationspartner 12 über die anwendungsbeschränkte authentifizierte Verbindung 16 zwischen dem ersten Kommunikationspartner 12 und der jeweiligen Benutzeranwendung auf dem zweiten Kommunikationspartner 14 auszutauschen. Das Austauschen von anwendungsbezogenen Zugangsdaten zwischen einer Benutzeranwendung auf dem zweiten Kommunikationspartner 14 und der Serveranwendung auf dem ersten Kommunikationspartner 12 erfolgt dabei nur beim erstmaligen Verbindungsaufbau zwischen der jeweiligen Benutzeranwendung auf dem zweiten Kommunikationspartner 14 und dem ersten Kommunikationspartner 12.

Figur 2 zeigt ein Verfahren zum Bereitstellen einer authentifizierten Verbindung 16 zwischen zwei Kommunikationspartnern 12, 14, welches mit den folgenden Schritten beginnt:
36) Ausführen einer ersten Benutzeranwendung auf einem zweiten Kommunikationspartner 14 der mindestens zwei Kommunikationspartner 12, 14; und
38) Ausführen einer Serveranwendung auf einem ersten Kommunikationspartner 12 der zwei Kommunikationspartner 12, 14.

Die erste Benutzeranwendung ist eine Musikwiedergabeanwendung. Der erste Kommunikationspartner 12 als fahrzeuginterne Einrichtung und der zweite Kommunikationspartner 14 ist als mobiles Endgerät ausgebildet. Damit eine sichere Kommunikation zwischen dem ersten Kommunikationspartner 12 und dem zweiten Kommunikationspartner 14 erfolgen kann, wird der folgende Schritt ausgeführt:
40) Durchführen eines anwendungsbezogenen Pairings zwischen der Serveranwendung auf dem ersten Kommunikationspartner 12 und der ersten Benutzeranwendung auf dem zweiten Kommunikationspartner 14 zur Herstellung einer anwendungsbeschränkten authentifizierten Verbindung 16 zwischen dem ersten Kommunikationspartner 12 und der ersten Benutzeranwendung auf dem zweiten Kommunikationspartner 14.

Nachdem das anwendungsbezogene Pairing zwischen der Serveranwendung auf dem ersten Kommunikationspartner 12 und der ersten Benutzeranwendung auf dem zweiten Kommunikationspartner 14 durchgeführt worden ist, können zwischen der Serveranwendung auf dem ersten Kommunikationspartner 12 und der ersten Benutzeranwendung auf dem zweiten Kommunikationspartner 14 Daten ausgetauscht werden, sodass der folgende Schritt ausgeführt wird:
42) Austauschen von ersten anwendungsbezogenen Zugangsdaten zwischen der ersten Benutzeranwendung auf dem zweiten Kommunikationspartner 14 und der Serveranwendung auf dem ersten Kommunikationspartner 12 über die anwendungsbeschränkte authentifizierte Verbindung 16 zwischen dem ersten Kommunikationspartner 12 und der ersten Benutzeranwendung auf dem zweiten Kommunikationspartner 14.

Die ersten Zugangsdaten umfassen einen anwendungsbezogen Benutzernamen und ein anwendungsbezogenes Passwort. Das Austauschen der anwendungsbezogenen Zugangsdaten zwischen der ersten Benutzeranwendung auf dem zweiten Kommunikationspartner 14 und der Serveranwendung auf dem ersten Kommunikationspartner 12 erfolgt nur beim erstmaligen Verbindungsaufbau zwischen der ersten Benutzeranwendung auf dem zweiten Kommunikationspartner 14 und dem ersten Kommunikationspartner 12. Damit auf diesen Datenaustausch bei dem Aufbau nachfolgender Verbindungen verzichtet werden kann, wird der folgende Schritt durchgeführt:
44) Speichern der zwischen der ersten Benutzeranwendung auf dem zweiten Kommunikationspartner 14 und der Serveranwendung auf dem ersten Kommunikationspartner 12 ausgetauschten anwendungsbezogenen Zugangsdaten auf einem Speicher des ersten Kommunikationspartners 12.

Neben der ersten Benutzeranwendung, welche eine Musikwiedergabeanwendung ist, wird auf dem zweiten Kommunikationspartner 14 ebenfalls eine zweite Benutzeranwendung ausgeführt, mit welcher der Benutzer Zugang zu einem sozialen Online-Netzwerk hat. Hierzu wird der folgende Schritt ausgeführt:
46) Ausführen einer zweiten Benutzeranwendung auf dem zweiten Kommunikationspartner 14.

Damit eine sichere Kommunikation zwischen dem ersten Kommunikationspartner 12 und dem zweiten Kommunikationspartner 14 erfolgen kann, wird der folgende Schritt ausgeführt:
48) Durchführen eines anwendungsbezogenen Pairings zwischen der Serveranwendung auf dem ersten Kommunikationspartner 12 und der zweiten Benutzeranwendung auf dem zweiten Kommunikationspartner 14 zur Herstellung einer anwendungsbeschränkten authentifizierten Verbindung 16 zwischen dem ersten Kommunikationspartner 12 und der zweiten Benutzeranwendung auf dem zweiten Kommunikationspartner 14.

Nachdem das anwendungsbezogene Pairing zwischen der Serveranwendung auf dem ersten Kommunikationspartner 12 und der zweiten Benutzeranwendung auf dem zweiten Kommunikationspartner 14 durchgeführt worden ist, können zwischen der Serveranwendung auf dem ersten Kommunikationspartner 12 und der zweiten Benutzeranwendung auf dem zweiten Kommunikationspartner 14 Daten ausgetauscht werden, sodass der folgende Schritt ausgeführt wird:
50) Austauschen von zweiten anwendungsbezogenen Zugangsdaten zwischen der zweiten Benutzeranwendung auf dem zweiten Kommunikationspartner 14 und der Serveranwendung auf dem ersten Kommunikationspartner 12 über die anwendungsbeschränkte authentifizierte Verbindung 16 zwischen dem ersten Kommunikationspartner 12 und der zweiten Benutzeranwendung auf dem zweiten Kommunikationspartner 14.

Die zweiten Zugangsdaten umfassen ebenfalls einen anwendungsbezogen Benutzernamen und ein anwendungsbezogenes Passwort. Das Austauschen der anwendungsbezogenen Zugangsdaten zwischen der zweiten Benutzeranwendung auf dem zweiten Kommunikationspartner 14 und der Serveranwendung auf dem ersten Kommunikationspartner 12 erfolgt ebenfalls nur beim erstmaligen Verbindungsaufbau zwischen der zweiten Benutzeranwendung auf dem zweiten Kommunikationspartner 14 und dem ersten Kommunikationspartner 12. Damit auf diesen Datenaustausch bei dem Aufbau nachfolgender Verbindungen verzichtet werden kann, wird der folgende Schritt durchgeführt:
52) Speichern der zwischen der zweiten Benutzeranwendung auf dem zweiten Kommunikationspartner 14 und der Serveranwendung auf dem ersten Kommunikationspartner 12 ausgetauschten anwendungsbezogenen Zugangsdaten auf einem Speicher des ersten Kommunikationspartners 12.

Nachdem die Verbindung zwischen dem ersten Kommunikationspartner 12 und dem zweiten Kommunikationspartner 14 unterbrochen wurde, beispielsweise weil ein Benutzer des als mobiles Endgerät ausgebildeten zweiten Kommunikationspartners 14 das Fahrzeug 34 verlassen hat, in welchem der erste Kommunikationspartner 12 verbaut ist, kann ein beschleunigter Verbindungsaufbau zwischen der ersten Benutzeranwendung auf dem zweiten Kommunikationspartner 14 und der Serveranwendung auf dem ersten Kommunikationspartner 12 sowie zwischen der zweiten Benutzeranwendung auf dem zweiten Kommunikationspartner 14 und der Serveranwendung auf dem ersten Kommunikationspartner 12 erfolgen. Hierzu werden die folgenden Schritte ausgeführt:
54) Identifizieren des zweiten Kommunikationspartners 14 durch die Serveranwendung auf dem ersten Kommunikationspartner 12; und
56) Identifizieren der auf dem zweiten Kommunikationspartner 14 ausgeführten ersten Benutzeranwendung und zweiten Benutzeranwendung durch die Serveranwendung auf dem ersten Kommunikationspartner 12.

Nachdem die ersten Benutzeranwendung und die zweite Benutzeranwendung auf dem zweiten Kommunikationspartner identifiziert worden sind, können zum beschleunigten Verbindungsaufbau die folgenden Schritte durchgeführt werden:
58) Prüfen durch die Serveranwendung auf dem ersten Kommunikationspartner 12, ob bereits ein anwendungsbezogenes Pairing zwischen der Serveranwendung auf dem ersten Kommunikationspartner 12 und der ersten Benutzeranwendung und der zweiten Benutzeranwendung auf dem zweiten Kommunikationspartner 14 zur Herstellung einer anwendungsbeschränkten authentifizierten Verbindung 16 zwischen dem ersten Kommunikationspartner 12 und der jeweiligen Benutzeranwendung auf dem zweiten Kommunikationspartner 14 stattgefunden hat; und
60) Abrufen von gespeicherten anwendungsbezogenen Zugangsdaten von dem Speicher des ersten Kommunikationspartners 12 zur Herstellung einer anwendungsbeschränkten authentifizierten Verbindung 16 zwischen dem ersten Kommunikationspartner 12 und der jeweiligen Benutzeranwendung auf dem zweiten Kommunikationspartner 14.

Die Erfindung erlaubt durch die Durchführung eines anwendungsbezogenen Pairings zwischen einer Serveranwendung auf einem ersten Kommunikationspartner und einer Benutzeranwendung auf einem zweiten Kommunikationspartner eine Kopplung auf Anwendungsebene, sodass die anwendungsbegrenzte Kommunikation unabhängig von dem Schutz des Kommunikationskanals zwischen den Kommunikationspartnern ist.

### Bezugszeichenliste

- 10: Kommunikationssystem
- 12: erster Kommunikationspartner
- 14: zweiter Kommunikationspartner
- 16: Verbindung
- 18: Recheneinheit
- 20: Kommunikationsmodul
- 22: Anzeigeeinrichtung
- 24: Betätigungseinrichtung
- 26: Recheneinheit
- 28: Kommunikationsmodul
- 30: Anzeigeeinrichtung
- 32: Betätigungseinrichtung
- 34: Fahrzeug
- 36-60: Verfahrensschritte

## Patentansprüche

1. Verfahren zum Bereitstellen einer authentifizierten Verbindung (16) zwischen mindestens zwei Kommunikationspartnern (12, 14), mit den Schritten:
- Ausführen einer Serveranwendung auf einem ersten Kommunikationspartner (12) der mindestens zwei Kommunikationspartner (12, 14);
- Ausführen einer ersten Benutzeranwendung auf einem zweiten Kommunikationspartner (14) der mindestens zwei Kommunikationspartner (12, 14); und
- Durchführen eines anwendungsbezogenen Pairings zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14);
- Austauschen von ersten anwendungsbezogenen Zugangsdaten zwischen der ersten Benutzeranwendung auf dem zweiten Kommunikationspartner (14) und der Serveranwendung auf dem ersten Kommunikationspartner (12) über die anwendungsbeschränkte authentifizierte Verbindung (16) zwischen dem ersten Kommunikationspartner (12) und der ersten Benutzeranwendung auf dem zweiten Kommunikationspartner (14), wobei die ersten Zugangsdaten ein Zertifikat umfassen;
- Ausführen einer zweiten Benutzeranwendung auf dem zweiten Kommunikationspartner (14); und
- Durchführen eines anwendungsbezogenen Pairings zwischen der Serveranwendung auf dem ersten Kommunikationspartner (12) und der zweiten Benutzeranwendung auf dem zweiten Kommunikationspartner (14) zur Herstellung einer anwendungsbeschränkten authentifizierten Verbindung (16) zwischen dem ersten Kommunikationspartner (12) und der zweiten Benutzeranwendung auf dem zweiten Kommunikationspartner (14);
- Identifizieren des zweiten Kommunikationspartners (14) durch die Serveranwendung auf dem ersten Kommunikationspartner (12);
- Identifizieren der auf dem zweiten Kommunikationspartner (14) ausgeführten ersten Benutzeranwendung durch die Serveranwendung auf dem ersten Kommunikationspartner (12);
- Prüfen durch die Serveranwendung auf dem ersten Kommunikationspartner (12), ob bereits ein anwendungsbezogenes Pairing zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14) stattgefunden hat;
- Abrufen von gespeicherten anwendungsbezogenen Zugangsdaten von einem Speicher des ersten Kommunikationspartners (12), falls ein anwendungsbezogenes Pairing zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14) stattgefunden hat.

2. Verfahren nach Anspruch 1, **gekennzeichnet durch** den Schritt:
- Austauschen von zweiten anwendungsbezogenen Zugangsdaten zwischen der zweiten Benutzeranwendung auf dem zweiten Kommunikationspartner (14) und der Serveranwendung auf dem ersten Kommunikationspartner (12) über die anwendungsbeschränkte authentifizierte Verbindung (16) zwischen dem ersten Kommunikationspartner (12) und der zweiten Benutzeranwendung auf dem zweiten Kommunikationspartner (14).

3. Verfahren nach einem der vorhergehenden Ansprüche, **dadurch gekennzeichnet, dass** das Austauschen von anwendungsbezogenen Zugangsdaten zwischen einer Benutzeranwendung auf dem zweiten Kommunikationspartner (14) und der Serveranwendung auf dem ersten Kommunikationspartner (12) nur beim erstmaligen Verbindungsaufbau zwischen der jeweiligen Benutzeranwendung auf dem zweiten Kommunikationspartner (14) und dem ersten Kommunikationspartner (12) erfolgt.

4. Verfahren nach einem der vorhergehenden Ansprüche, **gekennzeichnet durch** den Schritt:
- Speichern der zwischen einer Benutzeranwendung auf dem zweiten Kommunikationspartner (14) und der Serveranwendung auf dem ersten Kommunikationspartner (12) ausgetauschten anwendungsbezogenen Zugangsdaten auf einem Speicher des ersten Kommunikationspartners (12).

5. Verfahren nach einem der vorhergehenden Ansprüche, **dadurch gekennzeichnet, dass** die ersten Zugangsdaten ferner einen anwendungsbezogen Benutzernamen und/oder ein anwendungsbezogenes Passwort umfassen.

6. Verfahren nach einem der vorhergehenden Ansprüche, **dadurch gekennzeichnet, dass** das Durchführen eines anwendungsbezogenen Pairings zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14) zumindest einen der folgenden Schritte umfasst:
- Anzeigen von anwendungsbezogenen Pairing-Informationen auf dem ersten Kommunikationspartner (12);
- Anzeigen von anwendungsbezogenen Pairing-Informationen auf dem zweiten Kommunikationspartner (14);
- Bestätigen der anwendungsbezogenen Pairing-Informationen auf dem ersten Kommunikationspartner (12) durch einen Benutzer;
- Bestätigen der anwendungsbezogenen Pairing-Informationen auf dem zweiten Kommunikationspartner (14) durch einen Benutzer.

7. Verfahren nach einem der vorhergehenden Ansprüche, **dadurch gekennzeichnet, dass** der erste Kommunikationspartner (12) als fahrzeuginterne Einrichtung und/oder der zweite Kommunikationspartner (14) als mobiles Endgerät ausgebildet ist.

8. Kommunikationssystem (10), mit
- mindestens zwei Kommunikationspartnern (12, 14),
wobei auf einem ersten Kommunikationspartner (12) der mindestens zwei Kommunikationspartner (12, 14) eine Serveranwendung und auf einem zweiten Kommunikationspartner (14) der mindestens zwei Kommunikationspartner (12, 14) eine erste Benutzeranwendung installiert ist,
wobei das Kommunikationssystem (10) dazu eingerichtet ist, dass ein anwendungsbezogenes Pairing zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14) durchgeführt wird, wenn die Serveranwendung auf dem ersten Kommunikationspartner (12) und die erste Benutzeranwendung auf dem zweiten Kommunikationspartner (14) ausgeführt werden; und
wobei das Kommunikationssystem (10) dazu eingerichtet ist, erste anwendungsbezogene Zugangsdaten zwischen der ersten Benutzeranwendung auf dem zweiten Kommunikationspartner (14) und der Serveranwendung auf dem ersten Kommunikationspartner (12) über die anwendungsbeschränkte authentifizierte Verbindung (16) zwischen dem ersten Kommunikationspartner (12) und der ersten Benutzeranwendung auf dem zweiten Kommunikationspartner (14) auszutauschen, wobei die ersten Zugangsdaten ein Zertifikat umfassen;
dass auf dem zweiten Kommunikationspartner (14) eine zweite Benutzeranwendung installiert ist und das Kommunikationssystem (10) dazu eingerichtet ist, dass ein anwendungsbezogenes Pairing zwischen der Serveranwendung auf dem ersten Kommunikationspartner (12) und der zweiten Benutzeranwendung auf dem zweiten Kommunikationspartner (14) zur Herstellung einer anwendungsbeschränkten authentifizierten Verbindung (16) zwischen dem ersten Kommunikationspartner (12) und der zweiten Benutzeranwendung auf dem zweiten Kommunikationspartner (14) durchgeführt wird, wenn die Serveranwendung auf dem ersten Kommunikationspartner (12) und die zweite Benutzeranwendung auf dem zweiten Kommunikationspartner (14) ausgeführt werden;
wobei das Kommunikationssystem (10) weiter dazu eingerichtet ist zum
- Identifizieren des zweiten Kommunikationspartners (14) durch die Serveranwendung auf dem ersten Kommunikationspartner (12);
- Identifizieren der auf dem zweiten Kommunikationspartner (14) ausgeführten ersten Benutzeranwendung durch die Serveranwendung auf dem ersten Kommunikationspartner (12);
- Prüfen durch die Serveranwendung auf dem ersten Kommunikationspartner (12), ob bereits ein anwendungsbezogenes Pairing zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14) stattgefunden hat;
- Abrufen von gespeicherten anwendungsbezogenen Zugangsdaten von einem Speicher des ersten Kommunikationspartners (12), falls ein anwendungsbezogenes Pairing zwischen der Serveranwendung auf dem ersten Kommunikationspartner (12) und der ersten Benutzeranwendung auf dem zweiten Kommunikationspartner (14) zur Herstellung einer anwendungsbeschränkten authentifizierten Verbindung (16) zwischen dem ersten Kommunikationspartner (12) und der ersten Benutzeranwendung auf dem zweiten Kommunikationspartner (14) stattgefunden hat.

9. Kommunikationssystem (10) nach Anspruch 8, **dadurch gekennzeichnet, ; dass** das Kommunikationssystem (10) dazu eingerichtet ist, zweite anwendungsbezogene Zugangsdaten zwischen der zweiten Benutzeranwendung auf dem zweiten Kommunikationspartner (14) und der Serveranwendung auf dem ersten Kommunikationspartner (12) über die anwendungsbeschränkte authentifizierte Verbindung (16) zwischen dem ersten Kommunikationspartner (12) und der zweiten Benutzeranwendung auf dem zweiten Kommunikationspartner (14) auszutauschen.

10. Kommunikationssystem (10) nach einem der Ansprüche 8 und 9, **dadurch gekennzeichnet, dass** der erste Kommunikationspartner (12) einen Speicher umfasst, wobei der erste Kommunikationspartner (12) dazu eingerichtet ist, die zwischen einer Benutzeranwendung auf dem zweiten Kommunikationspartner (14) und der Serveranwendung auf dem ersten Kommunikationspartner (12) ausgetauschten anwendungsbezogenen Zugangsdaten auf dem Speicher zu speichern.

11. Kommunikationssystem (10) nach einem der Ansprüche 8 bis 10, **dadurch gekennzeichnet, dass** der erste Kommunikationspartner (12) als fahrzeuginterne Einrichtung und/oder der zweite Kommunikationspartner (14) als mobiles Endgerät ausgebildet ist.

12. Kommunikationssystem (10) nach einem der Ansprüche 8 bis 11, **dadurch gekennzeichnet, dass** das Kommunikationssystem (10) dazu eingerichtet ist, das Verfahren zum Bereitstellen einer authentifizierten Verbindung (16) zwischen mindestens zwei Kommunikationspartnern (12, 14) nach einem der Ansprüche 1 bis 9 auszuführen.

## Claims

1. Method for providing an authenticated connection (16) between at least two communication partners (12, 14), having the steps of:
- executing a server application at a first communication partner (12) of the at least two communication partners (12, 14);
- executing a first user application at a second communication partner (14) of the at least two communication partners (12, 14); and
- performing an application-related pairing between the server application at the first communication partner (12) and the first user application at the second communication partner (14), in order to establish an application-restricted, authenticated connection (16) between the first communication partner (12) and the first user application at the second communication partner (14);
- exchanging first, application-related, access data between the first user application at the second communication partner (14) and the server application at the first communication partner (12) via the application-restricted, authenticated connection (16) between the first communication partner (12) and the first user application at the second communication partner (14), wherein the first access data comprise a certificate;
- executing a second user application at the second communication partner (14); and
- performing an application-related pairing between the server application at the first communication partner (12) and the second user application at the second communication partner (14), in order to establish an application-restricted, authenticated connection (16) between the first communication partner (12) and the second user application at the second communication partner (14);
- identifying the second communication partner (14) via the server application at the first communication partner (12);
- identifying, via the server application at the first communication partner (12), the first user application executed at the second communication partner (14);
- checking, by means of the server application at the first communication partner (12), whether an application-related pairing has already taken place between the server application at the first communication partner (12) and the first user application at the second communication partner (14), in order to establish an application-restricted, authenticated connection (16) between the first communication partner (12) and the first user application at the second communication partner (14);
- retrieving stored, application-related access data from a memory of the first communication partner (12) in the event that an application-related pairing has taken place between the server application at the first communication partner (12) and the first user application at the second communication partner (14), in order to establish an application-restricted, authenticated connection (16) between the first communication partner (12) and the first user application at the second communication partner (14).

2. Method according to claim 1, **characterized by** the step of:
- exchanging second, application-related access data between the second user application at the second communication partner (14) and the server application at the first communication partner (12), via the application-restricted, authenticated connection (16) between the first communication partner (12) and the second user application at the second communication partner (14).

3. Method according to one of the preceding claims, **characterized in that** the exchange of application-related access data between a user application at the second communication partner (14) and the server application at the first communication partner (12) takes place only upon establishing a connection between the respective user application at the second communication partner (14) and the first communication partner (12) for the first time.

4. Method according to one of the preceding claims, **characterized by** the step of:
- storing, in a memory of the first communication partner (12), the application-related access data exchanged between a user application at the second communication partner (14) and the server application at the first communication partner (12).

5. Method according to one of the preceding claims, **characterized in that** the first access data further comprise an application-related user name and/or an application-related password.

6. Method according to one of the preceding claims, **characterized in that** performing an application-related pairing between the server application at the first communication partner (12) and the first user application at the second communication partner (14), in order to establish an application-restricted, authenticated connection (16) between the first communication partner (12) and the first user application at the second communication partner (14), comprises at least one of the following steps:
- displaying application-related pairing information at the first communication partner (12);
- displaying application-related pairing information at the second communication partner (14);
- confirmation of the application-related pairing information at the first communication partner (12) by a user;
- confirmation of the application-related pairing information at the second communication partner (14) by a user.

7. Method according to one of the preceding claims, **characterized in that** the first communication partner (12) is designed as an in-vehicle device, and/or the second communication partner (14) is designed as a mobile terminal device.

8. Communications system (10), having
- at least two communication partners (12, 14),
wherein a server application is installed at a first communication partner (12) of the at least two communication partners (12, 14), and a first user application is installed at a second communication partner (14) of the at least two communication partners (12, 14),
wherein the communications system (10) is configured such that an application-related pairing between the server application at the first communication partner (12) and the first user application at the second communication partner (14), in order to establish an application-restricted, authenticated connection (16) between the first communication partner (12) and the first user application at the second communication partner (14), is performed if the server application is executed at the first communication partner (12) and the first user application is executed at the second communication partner (14); and
wherein the communications system (10) is configured to exchange first, application-related, access data between the first user application at the second communication partner (14) and the server application at the first communication partner (12), via the application-restricted, authenticated connection (16) between the first communication partner (12) and the first user application at the second communication partner (14), wherein the first access data comprises a certificate;
that a second user application is installed at the second communication partner (14), and the communications system (10) is configured such that an application-related pairing between the server application at the first communication partner (12) and the second user application at the second communication partner (14), in order to establish an application-restricted, authenticated connection (16) between the first communication partner (12) and the second user application at the second communication partner (14), is performed if the server application is executed at the first communication partner (12) and the second user application is executed at the second communication partner (14);
wherein the communications system (10) is further configured for
- identifying the second communication partner (14) via the server application at the first communication partner (12);
- identifying, via the server application at the first communication partner (12), the first user application executed at the second communication partner (14);
- checking, by means of the server application at the first communication partner (12), whether an application-related pairing has already taken place between the server application at the first communication partner (12) and the first user application at the second communication partner (14), in order to establish an application-restricted, authenticated connection (16) between the first communication partner (12) and the first user application at the second communication partner (14);
- retrieving stored, application-related, access data from a memory of the first communication partner (12) in the event that an application-related pairing has taken place between the server application at the first communication partner (12) and the first user application at the second communication partner (14), in order to establish an application-restricted, authenticated connection (16) between the first communication partner (12) and the first user application at the second communication partner (14).

9. Communications system (10) according to claim 8, **characterized in that** the communications system (10) is configured to exchange second, application-related, access data between the second user application at the second communication partner (14) and the server application at the first communication partner (12), via the application-restricted, authenticated connection (16) between the first communication partner (12) and the second user application at the second communication partner (14).

10. Communications system (10) according to one of claims 8 and 9, **characterized in that** the first communication partner (12) comprises a memory, wherein the first communication partner (12) is configured to store in the memory the application-related access data exchanged between a user application at the second communication partner (14) and the server application at the first communication partner (12).

11. Communications system (10) according to one of claims 8 through 10, **characterized in that** the first communication partner (12) is designed as an in-vehicle device, and/or the second communication partner (14) is designed as a mobile terminal device.

12. Communications system (10) according to one of claims 8 through 11, **characterized in that** the communication system (10) is configured to execute the method for providing an authenticated connection (16) between at least two communication partners (12, 14) according to one of claims 1 through 9.

## Revendications

1. Procédé permettant d'obtenir une liaison authentifiée (16) entre au moins deux partenaires de communication (12, 14) comprenant les étapes :
- d'exécution d'une application serveur sur un premier partenaire de communication (12) des au moins deux partenaires de communication (12, 14) ;
- d'exécution d'une première application utilisateur sur un deuxième partenaire de communication (14) des au moins deux partenaires de communication (12, 14) ; et
- de réalisation d'un appariement associé aux applications entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14) ;
- d'échange de premières données d'accès associées aux applications entre la première application utilisateur sur le deuxième partenaire de communication (14) et l'application serveur sur le premier partenaire de communication (12) par le biais de la liaison authentifiée limitée aux applications (16) entre le premier partenaire de communication (12) et la première application utilisateur sur le deuxième partenaire de communication (14), les premières données d'accès comprenant un certificat ;
- d'exécution d'une deuxième application utilisateur sur le deuxième partenaire de communication (14) ; et
- de réalisation d'un appariement associé aux applications entre l'application serveur sur le premier partenaire de communication (12) et la deuxième application utilisateur sur le deuxième partenaire de communication (14) pour l'établissement d'une liaison authentifiée limitée aux applications (16) entre le premier partenaire de communication (12) et la deuxième application utilisateur sur le deuxième partenaire de communication (14) ;
- d'identification du deuxième partenaire de communication (14) par le biais de l'application serveur sur le premier partenaire de communication (12) ;
- d'identification de la première application utilisateur exécutée sur le deuxième partenaire de communication (14) par le biais de l'application serveur sur le premier partenaire de communication (12) ;
- de vérification par le biais de l'application serveur sur le premier partenaire de communication (12) si un appariement associé aux applications entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14) a déjà eu lieu ;
- d'appel de données d'accès associées aux applications mémorisées d'une mémoire du premier partenaire de communication (12) dans le cas où un appariement associé aux applications entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14) a eu lieu.

2. Procédé selon la revendication 1, **caractérisé par** l'étape :
- d'échange de deuxièmes données d'accès associées aux applications entre la deuxième application utilisateur sur le deuxième partenaire de communication (14) et l'application serveur sur le premier partenaire de communication (12) par le biais de la liaison authentifiée limitée aux applications (16) entre le premier partenaire de communication (12) et la deuxième application utilisateur sur le deuxième partenaire de communication (14).

3. Procédé selon l'une quelconque des revendications précédentes, **caractérisé en ce que** l'échange de données d'accès associées aux applications entre une application utilisateur sur le deuxième partenaire de communication (14) et l'application serveur sur le premier partenaire de communication (12) n'est effectué que lors du premier établissement de liaison entre l'application utilisateur respective sur le deuxième partenaire de communication (14) et le premier partenaire de communication (12).

4. Procédé selon l'une quelconque des revendications précédentes, **caractérisé par** l'étape :
- de mémorisation des données d'accès associées aux applications échangées entre une application utilisateur sur le deuxième partenaire de communication (14) et l'application serveur sur le premier partenaire de communication (12) dans une mémoire du premier partenaire de communication (12).

5. Procédé selon l'une quelconque des revendications précédentes, **caractérisé en ce que** les premières données d'accès comprennent en outre un nom d'utilisateur associé aux applications et/ou un mot de passe associé aux applications.

6. Procédé selon l'une quelconque des revendications précédentes, **caractérisé en ce que** la réalisation d'un appariement associé aux applications entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14) comprend au moins une des étapes suivantes :
- affichage d'informations d'appariement associées aux applications sur le premier partenaire de communication (12) ;
- affichage d'informations d'appariement associées aux applications sur le deuxième partenaire de communication (14) ;
- confirmation des informations d'appariement associées aux applications sur le premier partenaire de communication (12) par un utilisateur ;
- confirmation des informations d'appariement associées aux applications sur le deuxième partenaire de communication (14) par un utilisateur.

7. Procédé selon l'une quelconque des revendications précédentes, **caractérisé en ce que** le premier partenaire de communication (12) est conçu comme un dispositif embarqué et/ou le deuxième partenaire de communication (14) est conçu comme un terminal mobile.

8. Système de communication (10), comprenant
- au moins deux partenaires de communication (12, 14),
dans lequel une application serveur est installée sur un premier partenaire de communication (12) des au moins deux partenaires de communication (12, 14) et une première application utilisateur est installée sur un deuxième partenaire de communication (14) des au moins deux partenaires de communication (12, 14),
dans lequel le système de communication (10) est conçu de sorte qu'un appariement associé aux applications soit réalisé entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14), lorsque l'application serveur est exécutée sur le premier partenaire de communication (12) et la première application utilisateur est exécutée sur le deuxième partenaire de communication (14) ; et
dans lequel le système de communication (10) est conçu pour échanger des premières données d'accès associées aux applications entre la première application utilisateur sur le deuxième partenaire de communication (14) et l'application serveur sur le premier partenaire de communication (12) par le biais de la liaison authentifiée limitée aux applications (16) entre le premier partenaire de communication (12) et la première application utilisateur sur le deuxième partenaire de communication (14), les premières données d'accès comprenant un certificat ;
qu'une deuxième application utilisateur est installée sur le deuxième partenaire de communication (14) et le système de communication (10) est conçu de sorte qu'un appariement associé aux applications soit réalisé entre l'application serveur sur le premier partenaire de communication (12) et la deuxième application utilisateur sur le deuxième partenaire de communication (14) pour l'établissement d'une liaison authentifiée limitée aux applications (16) entre le premier partenaire de communication (12) et la deuxième application utilisateur sur le deuxième partenaire de communication (14), lorsque l'application serveur est exécutée sur le premier partenaire de communication (12) et la deuxième application utilisateur est exécutée sur le deuxième partenaire de communication (14) ;
dans lequel le système de communication (10) est en outre conçu pour
- identifier le deuxième partenaire de communication (14) par le biais de l'application serveur sur le premier partenaire de communication (12) ;
- identifier la première application utilisateur exécutée sur le deuxième partenaire de communication (14) par le biais de l'application serveur sur le premier partenaire de communication (12) ;
- vérifier par le biais de l'application serveur sur le premier partenaire de communication (12) si un appariement associé aux applications entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14) a déjà eu lieu ;
- appeler des données d'accès associées aux applications mémorisées dans une mémoire du premier partenaire de communication (12) dans le cas où un appariement associé aux applications entre l'application serveur sur le premier partenaire de communication (12) et la première application utilisateur sur le deuxième partenaire de communication (14) pour l'établissement d'une liaison authentifiée limitée aux applications (16) entre le premier partenaire de communication (12) et la première application utilisateur sur le deuxième partenaire de communication (14) a eu lieu.

9. Système de communication (10) selon la revendication 8, **caractérisé en ce que** le système de communication (10) est conçu pour échanger des deuxièmes données d'accès associées aux applications entre la deuxième application utilisateur sur le deuxième partenaire de communication (14) et l'application serveur sur le premier partenaire de communication (12) par le biais de la liaison authentifiée limitée aux applications (16) entre le premier partenaire de communication (12) et la deuxième application utilisateur sur le deuxième partenaire de communication (14).

10. Système de communication (10) selon l'une quelconque des revendications 8 et 9, **caractérisé en ce que** le premier partenaire de communication (12) comprend une mémoire, le premier partenaire de communication (12) étant conçu pour mémoriser les données d'accès associées aux applications échangées entre une application utilisateur sur le deuxième partenaire de communication (14) et l'application serveur sur le premier partenaire de communication (12) dans la mémoire.

11. Système de communication (10) selon l'une quelconque des revendications 8 à 10, **caractérisé en ce que** le premier partenaire de communication (12) est conçu comme un dispositif embarqué et/ou le deuxième partenaire de communication (14) est conçu comme un terminal mobile.

12. Système de communication (10) selon l'une quelconque des revendications 8 à 11, **caractérisé en ce que** le système de communication (10) est conçu pour exécuter le procédé permettant d'obtenir une liaison authentifiée (16) entre au moins deux partenaires de communication (12, 14) selon l'une quelconque des revendications 1 à 9.
